# EUROPÄISCHE PATENTSCHRIFT

(11) **EP 0 950 574 B1**
(45) Veröffentlichungstag und Bekanntmachung des Hinweises auf die Patenterteilung: **29.09.2004**
(21) Anmeldenummer: 99104085.8
(22) Anmeldetag: 18.03.1999
(51) Int. Cl.: B60R 16/02

(54) **Leitungsdurchführung**
Conduit lead-through
Traversée de conduite

(30) Priorität: 18.04.1998 DE 19817279
(43) Veröffentlichungstag der Anmeldung: 20.10.1999
(73) Patentinhaber: Volkswagen Aktiengesellschaft, 38436 Wolfsburg (DE)
(72) Erfinder: Köppel, Lars, 38106 Braunschweig (DE)

(56) Entgegenhaltungen:
- DE-A- 19 701 511
- FR-A- 1 120 707
- US-A- 3 836 269
- US-A- 4 640 479
- US-A- 4 912 287
- US-A- 5 545 854

## Beschreibung

Die Erfindung betrifft eine Leitungsdurchführung für eine Wandöffnung, insbesondere Leitungsdurchführung in Kraftfahrzeugen, mit einem in die Wandöffnung eingesetzten elastischen Körper mit einer Leitungsdurchtrittsöffnung, deren Öffnungsquerschnitt an den Leitungsquerschnitt in der Weise anpaßbar ist, daß die Leitung unter radialer Vorspannung aufgenommen wird, wobei der elastische Körper einen radialen Schlitz aufweist, und eine Verschlusseinrichtung vorgesehen ist, mit der die durch den Schlitz voneinander getrennten Hälften des elastischen Körpers miteinander verbindbar sind.

Eine Leitungsdurchführung der vorgenannten Art ist z. B. in der DE 44 36 778 A1 beschrieben. Bei dieser Leitungsdurchführung weist der elastische Körper einen als Kanal ausgebildeten Abschnitt auf, an den eine Verschließeinrichtung angeformt ist. Nach dem Durchführen der Elektrokabel durch den Kanal wird dieser mittels der Verschließeinrichtung zusammengedrückt bis die Kanalwand den Verbund aus Elektrokabeln fest umschließt.

Nachteilig bei dieser Ausführung ist jedoch, daß die Kabel in den elastischen Körper eingeführt werden müssen, wobei die Leitungsdurchtrittsöffnung z. B. mittels eines Werkzeuges aufgeweitet werden muß.

Die gattungsbildende DE 197 01 511 A1 offenbart eine Tülle zur Durchführung von elektrischen Leitungen durch Wandungen mit einem Tüllenkörper, der mindestens eine Durchgangsöffnung für eine oder mehrere elektrische Leitungen aufweist. An seinem Außenumfang ist zumindest eine bereichsweise umlaufende Dicht- und Haltelippenanordnung zur Festlegung in einem Ausschnitt einer Wandung vorhanden, welche mindestens eine Schlitzung beinhaltet, die sich vom Außenumfang zu zumindest einer Durchgangsöffnung erstreckt. Die beiden eine Schlitzung begrenzenden Stirnflächen sind dabei mittels eines Kupplungselementes, das die Schlitzung überbrückt, in einer Stellung fixierbar, in der sie aneinander liegen.

In der US 4,640,479 ist eine Zugentlastung für eine Leitung beschrieben, welche durch kontrollierbares Zusammendrücken einer umgreifenden, geteilten Durchführungstülle ein Festhalten der Leitung bewirkt.

Der Erfindung liegt die Aufgabe zugrunde eine Leitungsdurchführung durch eine Wandöffnung nach dem Oberbegriff des Patentanspruchs 1 dergestalt zu verbessern, daß die Leitungen möglichst einfach in den elastischen Körper eingelegt werden können.

Erfindungsgemäß wird vorgeschlagen, daß der elastische Körper an dem Umfang der Leitungsdurchtrittsöffnung eine Kerbe aufweist.

Die Leitungen können dann besonders einfach durch Auseinanderziehen des Schlitzes in die Leitungsdurchtrittsöffnung des elastischen Körpers eingelegt werden. Anschließend werden die durch den Schlitz voneinander getrennten Hälften mit den dafür vorgesehenen Mitteln miteinander verbunden, so daß die Leitungsdurchtrittsöffnung radial geschlossen wird.

Der elastische Körper wird dann mit den eingelegten Leitungen in die Wandöffnung eingesetzt, wobei durch das Einsetzen in die Wandöffnung ein radialer Druck auf den elastischen Körper ausgeübt wird, so daß sich eine im wesentlichen längswasserdichte Leitungsdurchführung ergibt. Die Außenabmessungen des elastischen Körpers sind vorteilhafterweise wesentlich größer als die Leitungsdurchtrittsöffnung, so daß sich die elektrischen Leitungen mit dem elastischen Körper besonders einfach in die wesentlich größere Wandöffnung einführen lassen. Ein kompliziertes Einfädeln der Leitungen in die Wandöffnung, auch bei einem sehr zerfransten Leitungsstrang, wird damit vermieden. Um das Durchdringen von Feuchtigkeit zu verhindern ist der elastische Körper zweckmäßigerweise in seiner äußeren Geometrie an die Wandöffnung angepaßt und füllt den zwischen den elektrischen Leitungen und der Wandöffnung vorhandenen Spalt vollständig und abdichtend aus.

Der elastische Körper kann einen als Kanal ausgebildeten Fortsatz aufweisen. Der Fortsatz kann einstückig mit dem elastischen Körper ausgebildet sein oder als ein gesondertes Bauteil in die Leitungsdurchtrittsöffnung eingelegt sein. Der Fortsatz wird dann mittels herkömmlicher Kabelbinder zusammengepreßt, so daß sich eine zusätzliche Abdichtung der Kabel ergibt.

Ferner wird vorgeschlagen, daß der elastische Körper eine asymmetrische Außenkontur aufweist. Dadurch ist eine mechanische Kodierung gegeben und der elastische Körper kann nur in einer bestimmten Position in der Wandöffnung angeordnet werden. Dies ist insbesondere dann von Vorteil, wenn mehrere elastische Körper zur Abdichtung einer Wanddurchtrittsöffnung verwendet werden, wobei dann auch die Anordnung der einzelnen elastischen Körper zueinander durch die mechanische Kodierung vorgegeben sein kann.

Vorteilhafterweise weist der elastische Körper radiale Dichtlippen auf, die eine zusätzliche Abdichtungsfunktion der Wanddurchtrittsöffnung haben.

Der elastische Körper weist in Längsrichtung der Leitungen eine wesentlich größere Länge als die Dicke der die Wandöffnung beinhaltenden Wand auf. Somit kann der Monteur durch einfaches Einführen des elastischen Körpers die Wandöffnung dichtend abschließen, wobei er nicht darauf zu achten braucht, daß eine bestimmte Position des elastischen Körpers eingehalten wird. Besonders von Vorteil ist dieses, wenn mehrere elastische Körper zur Abdichtung einer Wanddurchtrittsöffnung vorgesehen werden, da auch in diesem Fall die Körper untereinander mit einer großen Toleranz eingefügt werden können, wobei immer noch eine Dichtfläche gegeben ist.

Die Erfindung wird nachfolgend anhand eines Ausführungsbeispiels näher erläutert. Die Figuren zeigen:
- Figur 1: elastischer Körper mit Leitungsdurchtrittsöffnung
- Figur 2: elastischer Körper mit Fortsatz und geöffneter Verschlußeinrichtung
- Figur 3: elastischer Körper mit Fortsatz und geschlossener Verschlußeinrichtung
- Figur 4: Wanddurchtrittsöffnung mit 3 darin angeordneten elastischen Körpern

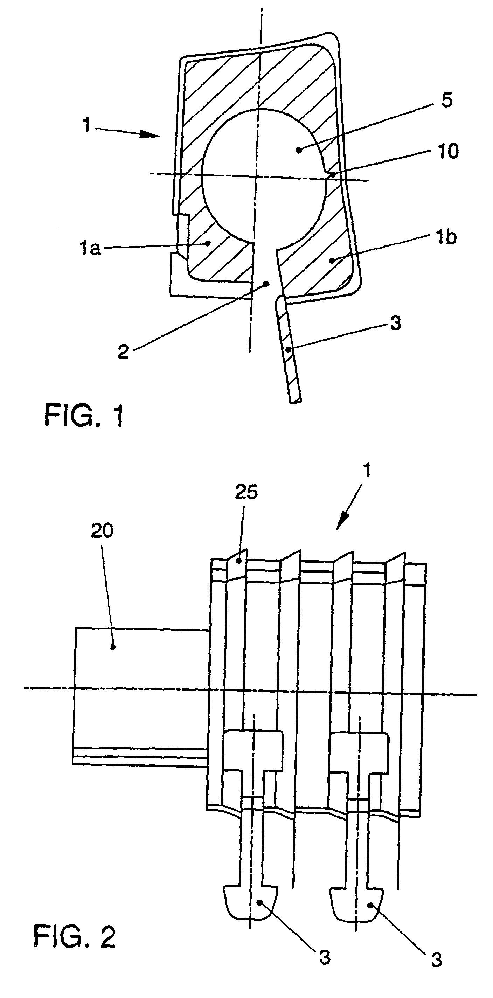

In Figur 1 ist ein elastischer Körper mit einer Leitungsdurchtrittsöffnung 5 zu erkennen. Der elastische Körper 1 weist einen Schlitz 2 auf, durch dessen Aufhalten es ermöglicht wird, von außen z. B. Leitungen, die hier nicht dargestellt sind, in die Leitungsdurchtrittsöffnung 5 einzulegen. Das Aufweiten des Schlitzes 2 wird durch die an dem Umfang der Leitungsöffnung 5 angeordnete Kerbe 10 erleichtert. Nach dem Einlegen der elektrischen Leitungen werden die durch den Schlitz 2 voneinander getrennten Hälften 1a und 1b des elastischen Körpers 1 durch Schließen der Verschlußeinrichtung 3 miteinander verbunden. Die Verschlußeinrichtung 3 kann z. B. einstückig durch Anspritzen an den elastischen Körper 1 angeformt sein oder als gesondertes Bauteil nach Art einer Schelle oder eines Gürtels den elastischen Körper 1 von außen umgreifen. Besonders kostengünstig ist es jedoch die Verschlußeinrichtung 3 einstückig mit dem elastischen Körper 1 auszubilden. Der elastische Körper 1 ist wesentlich größer ausgebildet als die Leitungsdurchtrittsöffnung 5, wodurch ein kompliziertes Einfädeln der elektrischen Leitungen in eine nicht dargestellte Wanddurchtrittsöffnung entfällt. Die Wanddurchtrittsöffnung kann erheblich größer bemessen sein, wobei der verbleibende Spalt zwischen dem Rand der Wanddurchtrittsöffnung und den elektrischen Leitungen durch den elastischen Körper abdichtend ausgefüllt wird. Weiterhin hat der elastische Körper den Vorteil, daß er schallabsorbierend und akustisch dämpfend wirkt. Ein Klappern der elektrischen Leitungen in der Wand oder ein Geräuschdurchtritt wird dadurch verhindert. Als Werkstoff bieten sich handelsübliche Elastomerwerkstoffe an.

In Figur 2 ist der elastische Körper 1 mit dem Fortsatz 20 zu erkennen. Der Fortsatz 20 umgreift die elektrischen Leitungen noch ein Stück in axialer Richtung und bietet eine Angriffsfläche für einen Kabelbinder der um die elektrischen Leitungen gelegt wird und dadurch eine weitere axiale Verrutschsicherheit gibt. Der elastische Körper 1 weist an seinem Umfang Dichtlippen 25 auf, wodurch die Dichtwirkung zwischen der Wanddurchtrittsöffnung und dem elastischen Körper verbessert wird. Weiterhin sind zwei Verschlußeinrichtungen 3 in geöffnetem Zustand zu erkennen. Die Verschlußeinrichtungen 3 sind einstückig mit der Hälfte 1b ausgebildet und können z. B. unter Ausführung einer Dehnung in die jeweils andere Hälfte 1a eingehängt werden und damit die Hälfte 1b und 1a verbinden. Auf diese Weise wird die Eigenschaft des Elastomers, nämlich elastisch zu sein, auch hier für die Verschlußeinrichtung ausgenutzt.

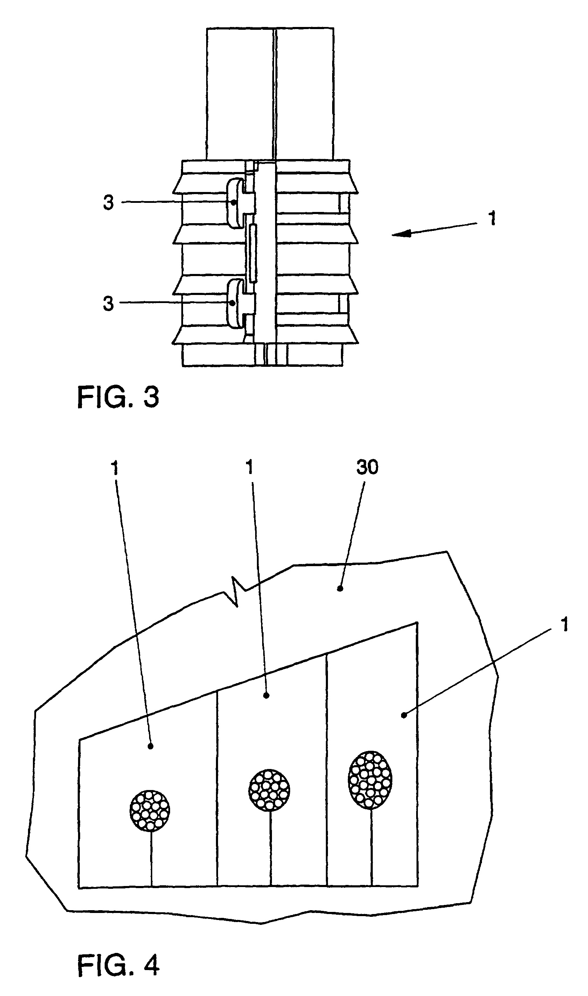

In Figur 3 ist der elastische Körper 1 mit den geschlossenen Verschlußeinrichtungen 3 zu erkennen.

In Figur 4 sind drei elastische Körper 1 in einer Öffnung der Wand 30 zu erkennen. Die elastischen Körper 1 weisen einen asymmetrischen Querschnitt auf und bilden durch Aneinanderliegen in einer bestimmten Reihenfolge in ihrer Gesamtheit die Geometrie der Öffnung der Wand 30. Somit ist durch die Außenkontur der elastischen Körper ihre jeweilige Position in der Wandöffnung vorgegeben. Dadurch wird sicher verhindert, daß sich die Leitungsstränge durch eine ungeordnete Anordnung verflechten.

## Patentansprüche

1. Leitungsdurchführung für eine Wandöffnung, insbesondere Leitungsdurchführung in Kraftfahrzeugen, mit in die Wandöffnung eingesetzten elastischen Körper mit einer Leitungsdurchtrittsöffnung, deren Öffnungsquerschnitt an den Leitungsquerschnitt in der Weise anpaßbar ist, daß die Leitung unter radialer Vorspannung aufgenommen wird, wobei der elastische Körper (1) einen radialen Schlitz (2) aufweist, und eine Verschlußeinrichtung (3) vorgesehen ist, mit der die durch den Schlitz (2) voneinander getrennten Hälften (1a ; 1b) des elastischen Körpers (1) miteinander verbindbar sind. **dadurch gekennzeichnet, dass** der elastische Körper (1) an dem Umfang der Leitungsdurchtrittsöffnung (5) eine Kerbe (10) aufweist.

2. Leitungsdurchführung nach Anspruch 1, **dadurch gekennzeichnet, daß** der elastische Körper (1) eine an die Wandöffnung angepaßte äußere Geometrie aufweist.

3. Leitungsdurchführung nach einem der Ansprüche 1 oder 2, **dadurch gekennzeichnet, daß** der elastische Körper mit den in der Leitungsdurchtrittsöffnung (5) eingelegten Leitungen die Wandöffnung im eingebauten Zustand abdichtend ausfüllt.

4. Leitungsdurchführung nach einem der vorangegangenen Ansprüche, **dadurch gekennzeichnet, daß** der elastische Körper (1) einen als Kanal ausgebildeten Fortsatz (20) aufweist.

5. Leitungsdurchführung nach einem der vorangegangenen Ansprüche, **dadurch gekennzeichnet, daß** der elastische Körper (1) eine asymmetrische Außenkontur aufweist.

6. Leitungsdurchführung nach einem der vorangegangenen Ansprüche, **dadurch gekennzeichnet, daß** der elastische Körper (1) radiale Dichtlippen (25) aufweist.

7. Leitungsdurchführung nach einem der vorangegangenen Ansprüche, **dadurch gekennzeichnet, daß** der elastische Körper (1) in Längsrichtung der Leitungen eine wesentlich größere Länge als die Dicke der die Wandöffnung bildenden Wand aufweist.

## Claims

1. Cable lead-through for a wall opening, in particular a cable lead-through in motor vehicles, with an elastic body which is inserted into the wall opening and has a cable passage opening, the opening cross-section of which can be adjusted to the cable cross-section, in such a way that the cable is accommodated under radial pre-tensioning, the elastic body (1) having a radial slit (2), and a sealing device (3) being provided, by means of which the halves (1a; 1b) of the elastic body (1), separated from one another by the slit (2), can be joined together, **characterized in that** the elastic body (1) has a notch (1) on the periphery of the cable passage opening (5).

2. Cable lead-through according to Claim 1, **characterized in that** the elastic body (1) has an external geometry adapted to the wall opening.

3. Cable lead-through according to either of Claims 1 or 2, **characterized in that** when fitted, with the cables inserted in the cable passage opening (5), the elastic body fills the wall opening, forming a seal.

4. Cable lead-through according to any one of the preceding Claims, **characterized in that** the elastic body (1) has an extension (20) in the form of a duct.

5. Cable lead-through according to any one of the preceding Claims, **characterized in that** the elastic body (1) has an asymmetrical external contour.

6. Cable lead-through according to any one of the preceding Claims, **characterized in that** the elastic body (1) has radial sealing lips (25).

7. Cable lead-through according to any one of the preceding Claims, **characterized in that** the elastic body (1) has a length in the longitudinal direction of the cables substantially greater than the thickness of the wall forming wall opening.

## Revendications

1. Passage de conduite pour une ouverture dans une cloison, notamment passage de conduite dans des véhicules automobiles, avec un corps élastique inséré dans l'ouverture de la cloison, avec un orifice de passage de conduite, dont la section transversale de l'orifice est ajustable à la section transversale de la conduite de façon à ce que la conduite soit réceptionnée sous une précontrainte radiale, le corps élastique (1) étant muni d'une fente radiale (2) et un dispositif de fermeture (3), permettant de relier les moitiés (1a, 1b) du corps élastique (1) qui sont séparées entre elles par la fente (2), étant prévu, **caractérisé en ce que** le corps élastique (1) est muni d'une encoche (10) sur la périphérie de l'orifice de passage de conduite (5).

2. Passage de conduite selon la revendication 1, **caractérisé en ce que** le corps élastique (1) présente une géométrie extérieure adaptée à l'ouverture dans la cloison.

3. Passage de conduite selon l'une quelconque des revendications 1 ou 2, **caractérisé en ce qu'**à l'état monté, lorsque les conduites sont posées dans l'orifice de passage de conduite (5), le corps élastique remplit l'ouverture dans la cloison de façon étanche.

4. Passage de conduite selon l'une quelconque des revendications précédentes, **caractérisé en ce que** le corps élastique (1) est muni d'un prolongement (20) conçu sous la forme d'un canal.

5. Passage de conduite selon l'une quelconque des revendications précédentes, **caractérisé en ce que** le corps élastique (1) présente un contour externe asymétrique.

6. Passage de conduite selon l'une quelconque des revendications précédentes, **caractérisé en ce que** le corps élastique (1) est muni de lèvres d'étanchéité (25) radiales.

7. Passage de conduite selon l'une quelconque des revendications précédentes, **caractérisé en ce que** dans le sens longitudinal des conduites, le corps élastique (1) a une longueur nettement supérieure à l'épaisseur de la cloison formant l'ouverture dans la cloison.
